# EUROPEAN PATENT APPLICATION

(11) **EP 3 968 248 A1**
(43) Date of publication of application: **16.03.2022**
(21) Application number: 20196263.6
(22) Date of filing: 15.09.2020
(51) Int. Cl.: G06Q 10/06, G06N 5/02

(54) **DEVICE, COMPUTING PLATFORM AND METHOD OF ANALYZING LOG FILES OF AN INDUSTRIAL PLANT**

(71) Applicant: Siemens Aktiengesellschaft, 80333 München (DE)
(72) Inventor: Brikis, Georgia Olympia, 81739 München (DE); Lavrik, Vladimir, 63303 Dreieich (DE); Mogoreanu, Serghei, 81827 München (DE); Scholz, André, 91522 Ansbach (DE)

(57) **Abstract**

Device, Computing Platform and Method of Analyzing Log Files of an Industrial Plant are disclosed. The method comprising: determining at least one block (122) in log entries of the log files, wherein the log entries comprises one or more log messages and wherein the block (122) represents co-occurring log messages; annotating the co-occurring log messages of the block (122) using semantic metadata (134), wherein the semantic metadata (134) defines one or more message types for the co-occurring log messages, wherein the semantic metadata (134) is indicative of at least one of a start action, an end action, a source, an anomaly, a cause and an inspect action; generating a coherent representation (142, 726, 774) for the block (122) by representing the co-occurring log messages in a graph based on the semantic metadata (134); and enabling detection of at least one event in the block (122) based on a comparison the coherent representation (142, 726, 774) with template representations of predefined events associated with the industrial plant (710).

## Description

The present invention relates to analyzing log files of an industrial plant. Particularly, the present invention relates to automatic and/or semi-automatic methods of analyzing the log files.

In industrial environments such as industrial plant, useful information may be recorded in log files. For example, events that happen during operation of the industrial plant or during usage of automation and engineering systems or during execution applications running on the engineering systems, the events may be written into log files. Therefore, log files may provide an audit trail for the industrial plant that can be used to understand the activity of the system and to diagnose problems. The log files may be essential for understanding the activities of complex processes that are implemented in the industrial plant, particularly in the case of processes with little expert interaction.

The volume of information in the log files makes a manual review of log files infeasible. Moreover, the generated log messages address system level events and do not directly transfer to problems in the higher-level system, such as the industrial plant. For example, ten lines of log messages that may not be sequential can all relate to one update process being performed. In industrial plants, the challenges are reinforced by the large number of different subsystems that are all logging their own information.

In order to be able to confidently interpret log files of these various system domain experts need to undergo extensive training. Knowledge about one system does not necessarily transfer to other systems (e.g. Windows logs get interpreted in a different way than WinCC logs). Similarly, it is time consuming and costly to build up knowledge bases with rules on how to interpret individual log messages.

Domain experts manually inspect log files, trying to find anomalies and concerning events. In some cases, domain experts may be assisted by log monitoring tools that match hand-crafted regular expressions against log entries or are use regular expressions to cluster log entries into groups. Such regular expressions may be manually shortlisted, making the formulation effortful, time consuming and not scalable across different types of log files. Other existing approaches include tools that detect patterns on log message-level. However, these methods do not consider complex patterns and hierarchical dependencies between log entries. Moreover, they do not highlight how critical individual log entries are.

Accordingly, the systems, devices and methods for analyzing log files of an industrial plant may benefit from improvements. The object of the present invention is achieved by providing a device, computing platform and a method to automatically interpret large amounts of log files and identify events in the industrial plant.

In an example the object of the present invention is achieved by a method of analyzing one or more log files of an industrial plant comprising determining at least one block in log entries of the log files, wherein the log entries comprises one or more log messages and wherein the block represents a sequence of co-occurring log messages; annotating the co-occurring log messages of the block using semantic metadata, wherein the semantic metadata defines one or more message types for the co-occurring log messages, wherein the semantic metadata is indicative of at least one of a start action, an end action, a source, an anomaly, a cause and an inspect action; generating a coherent representation for the block by representing the co-occurring log messages in a graph based on the semantic metadata; and enabling detection of at least one event in the block based on a comparison the coherent representation with template representations of predefined events associated with the industrial plant.

Another example of the present invention is a device for analyzing one or more log files generated during operation of an industrial plant, the device comprising a firmware module comprising a log analyzer module configured to perform at least one or more method steps disclosed herein.

A computing platform for analyzing one or more log files generated during operation of an industrial plant, the platform comprising at least one device communicatively coupled to the industrial plant via the computing platform, the at least one device comprising a processor and a memory unit, wherein the memory unit comprising a log analyzer module configured to perform at least one or more method steps disclosed herein and wherein the computing platform configured as at least one of an edge computing platform and a cloud computing platform.

A further example may include a non-transitory computer readable medium encoded with executable instructions (such as a software component on a storage device) that when executed, causes at least one processor to carry out this described method.

The method, device and computing platform advantageously mining sequence patterns from semi-structured text log messages and classifying the identified patterns (i.e. blocks or a portion of a block) into categories such as, error, warning and info. The identified patterns represent higher-level events that happen in the industrial plant (such as a plant-wide update process). The technical effect of the present invention is seen in the applications of log file analysis such as automatically highlight important sections in a log file to human reviewers/domain experts. Other technical effects include automatically generating a knowledge base of events and their severity and automatically detecting anomalies in the log files. For example, the present invention enables effective and automatic detection of an anomalous communication pattern between Servers and Clients of the industrial plant by analyzing the log entries. The present invention also enables comparison of operations across industrial plants within the same industry. For example, detection of atypical behavior in multiple devices of a specific industrial plant by comparison with devices from a comparable industrial plant may be enabled by through log file analysis of both industrial plants.

Before describing the suggested convention in more detail, it should be understood that various definitions for certain words and phrases are provided throughout this patent document, and those of ordinary skill in the art will understand that such definitions apply in many, if not most, instances to prior as well as future uses of such defined words and phrases. While some terms may include a wide variety of embodiments, the appended claims may expressly limit these terms to specific embodiments. It should also be appreciated that features explained in the context of the suggested method may also be comprised by the suggested system by appropriately configuring and adapting the system and vice versa.

As used herein "industrial plant" refers to a facility for manufacture/production/sorting may be semi or completely automated. The industrial plant may be part of an automation environment. For example, manufacturing automation environment, laboratory automation environment, building automation environment and the like. Further, according to the present invention, industrial plant may include a combination of industrial assets such as control devices, sensors, actuators that include a physical device and a digital model that can be used to configure and control the physical device. For example, Computer Numerical Control (CNC) machines, automation systems in an industrial production facility, motors, generators and the like.

Considering industrial plants and applications, the log files can refer to
- Power plants. The power plants can have multiple turbines and other pieces of equipment.
- Modern factories. The factories can have multiple interacting automated tools.
- Trains. The trains can have multiple semi-autonomous systems, for example for door control, climate control and for movement.
- Medical equipment. The equipment can have separate controllers for operating different movable parts e.g. the patient bed or the scanning tools and the devices e.g. MRT for imaging and data collection.

The method includes determining at least one block in log entries of the log files, wherein the log entries comprises one or more log messages and wherein the block represents a sequence of co-occurring log messages. In an embodiment, the log entries include a log of a continuous stream of operational and maintenance events occurring at different areas and levels within the industrial plant. The log is in the form of log messages and includes a combination of structured and unstructured text messages. The log entries may be generated every second or microsecond and can be stored as log files. In view of the volume and the unstructured nature of the log messages, it is challenging to analyze the log entries as is. Therefore, determining the block in the log entries enables the determination of co-occurring messages. As used herein "co-occurring messages" refers to messages related to a single event or co-related events.

To determine the block the method may include receiving the log entries of the log files based on a common structured representation, wherein the common structured representation of the log entries comprises at least of timestamps and the log messages, and a source identifier. For example, the common structured representation is a tabular structured format of the log entries. In another example, the common structured representation is a JavaScript Object Notation (JSON) format of the log entries. Further, the method may include creating one or more batches of the log entries using a sliding window of a predetermined temporal size; identifying a plurality of co-occurring log messages based on pattern frequency analysis of the batches, wherein the plurality of co-occurring log messages comprises the co-occurring log messages of the at least one block; and determining one or more blocks in the log entries by identifying separable co-occurring log messages in the plurality of co-occurring messages, wherein the separable co-occurring log messages are determined as separate blocks and wherein the one or more blocks comprises the at least one block.

In an embodiment the method may include converting the log entries in the log files into the common structured representation. When the log entries are in the common structured representation, identification of patterns (i.e. determination of blocks) in the log entries is enabled. However, to analyze the bulk of the log entries may be time consuming and computationally challenging. Accordingly, the sliding window is used to determine batches of log entries based on the predefine temporal size such as 100ms. For example, the batches are created by defining batches of log entries that is received within the time duration of 100ms. Each batch may then analyze using pattern frequency analysis to determine the plurality of co-occurring log messages. Therefore, the method advantageously breaks down the log entries into analyzable batches on which pattern frequency analysis is performed.

In an embodiment, the method may include identifying unique log messages in the batches and associated message-frequency, wherein message-frequency is the number of times each unique log message has been identified; ranking the unique log messages based on descending order of the message-frequency; generating a frequency pattern tree for the unique log messages, wherein the Frequency Pattern Tree (FPT) includes at least one of a path and one or more new branches, wherein the path includes the unique log messages with common prefix and wherein the new branches include unique log messages with no common prefix; and determining the plurality of co-occurring log messages based on the path and the new branches in the FPR. The present invention advantageously uses the FPT to identify the co-occurring log messages. Further, the branches of the FPT is used to identify the separable co-occurring log messages. Therefore, the log entries that are voluminous and challenging to analyze are effectively broken down into blocks of log messages that are related.

In an embodiment, the blocks can be determined not only for log files that have not been analyzed but on log files that have been reviewed by domain experts. Therefore, the method may include determining blocks in labelled/annotated log files; and validating the blocks based on the annotations of the log messages. For example, the blocks can be determined based on predefined events and associated log entries. In an industrial plant an event of firmware update failure is identified by associated log entries. A database of the predefined events and the associated log entries may be used to determine blocks in the log entries. Accordingly, the method may include determining the blocks in the log entries based on the predefined events in the industrial plants, wherein co-occurring log messages of associated log entries of the predefined events are used to determine the blocks.

Apart from determining blocks, the FPT may be used to also determine which block is significant and may relate to a critical event. The significant blocks may be used to generate the template representations for the predefined events. In an embodiment, the method may include generating the template representations for the predefined events in the industrial plant, wherein generating the template representations comprises identifying at least one co-occurring log messages as a significant block when frequency of the path in the frequency pattern tree is below a frequency threshold; mapping at least one predefined event to the significant block; and generating the template representations for the significant block as a knowledge graph. The frequency threshold may be customizable and input by a domain expert. Alternatively, it may be a fixed value determined in an example based on industry standards associated with the industrial plant. For example, when the frequency path is below a fixed value of 5, the path i.e. sequence of log messages if detected less than 5 times will be considered as the significant block. The method advantageously identifies infrequent patterns and recognizes them as meaningful. In an embodiment, the custom frequency threshold could be applied to only consider block as significant when they have a higher frequency than the threshold. Manually determining the frequency of the log messages and identifying patterns would be extremely challenging and time consuming. Further, identifying whether a pattern is frequent or not would require additional effort.

The method simplifies this analysis yet giving the flexibility to a domain expert to validate the analysis. In an embodiment, the method may include enabling selection of the FTP based on an approval or a rejection input from a domain expert. The FPT or a portion of the FPT is presented to the domain expert. For example, the FPT from the largest to smallest i.e. from the root of the FPT downward may be presented. If the FPT gets accepted, the sub-patterns that have the same frequency may be. This way, the expert only has to label a subset of the FPTs generated from the log files. By enabling selection of from the expert, nested patterns or blocks in the log entries can be identified. The method may further include storing the FPTs that were accepted as the significant blocks for the generation of the template representations.

After generation of the blocks using the FPTs, the blocks are annotated to further analyze the log messages in each block. The method includes annotating the co-occurring log messages of the block using the semantic metadata. The semantic metadata advantageously defines or identifies the message types for the co-occurring log messages. For example, the semantic metadata is indicative of a start action, an end action, a source, an anomaly, a cause and/or an inspect action. By labelling/annotating the co-occurring log messages in the block, the present invention enables unstructured text in the co-occurring log messages to be converted to structured information with tags that can be further used to generate the coherent representation in the form of a knowledge graph. In an embodiment, the method may include inspecting/enabling inspection of at least one of the co-occurring log messages when the annotated semantic metadata is the inspection action. The inspection is performed using a digital twin of the industrial plant or through an input from the domain expert. As used herein "digital twin" is a digital representation of the industrial plant in real-time. In an embodiment, the digital twin is a combination of physics-based models (such as piping and instrumentation diagram (P&ID) or finite element method analysis (FEMA)) and the data-based model (such as Bayesian models and clustering models). The digital twin may be stored in a graph database that provides a query-able, comprehensive representation of knowledge and physics of the system in the analysis. In an embodiment, when the inspection action is flagged (i.e. annotated) for a log message, the digital twin is queried using key words generated from the flagged log message. The response to the query is used to determine whether the log message type is a source, an anomaly or a cause.

The classification of the message types may be performed by identifying whether the log message relates to device, application, threat, path, file. Such log messages may be annotated as source. Similarly, start or end action is annotated when words like starting, has started, initiated, completed, finished, shut down are identified in the log messages. Further, inspection action is annotated when words like Initialization status, licensing status check, contains the new values are identified. Furthermore, cause is annotated when words like failed, is missing, deleted, error, unexpected failure, set computer in FAULT, is not reachable. The above examples are merely illustrative, and the annotation may further depend on the context of the log message within the block.

The semantic metadata may be generated though supervised, semi-supervised or unsupervised learning. The method may include generating the semantic metadata based on at least one of an input from the expert, a frequency-based data analysis performed on the log files and an ontology associated with the industrial plant. As used herein "ontology" refers to a formal conceptualization of the knowledge underlying the industrial plant and automation engineering in general. The ontologies provide definitions of concepts and relations between the engineering-data. The engineering ontology may be built based on existing ontological standards for a domain. For example, IEEE 1872-2015 Standard Ontologies for Robotics and Automation (IEEE-SA, 2015), which establishes a series of ontologies about the Robotics and Automation. In another example, Ontology for Industry 4.0 (O414) is dedicated to capture the Industry 4.0-specific domain concepts.

The annotation of co-occurring log messages in the block/blocks may be performed using natural language processing and/or machine learning. In an embodiment, the method may include extracting chunks from the co-occurring log messages in the blocks, wherein the chunks include one or more phrases with a distinct meaning; and annotating the phrases by classifying each phrase according to the semantic metadata using a classification model. The present invention proposes a chunking model and a semantic labeling model. In an embodiment, the chunking model extracts the chunks and phrases first performs a part of speech (POS) tagging on the block and then computes the chunks. The input to the semantic labelling model is a bag of phrases, based on the computed chunks. The semantic annotation task may be formulated as a multi-class classification problem on the basis of a phrase. In an embodiment, a neural network is used to learn the classification based on the examples provided by the domain experts or from the digital twin of the industrial plant.

The annotated co-occurring log messages are labelled and can be used to generate the coherent representation. The method includes generating a coherent representation for the block by representing the co-occurring log messages in a graph based on the semantic metadata. As used herein "coherent representation" refers to a representation of the co-occurring messages which can be directly used as input to a knowledge graph. In an embodiment, the method of generating the coherent representation may include defining a graph-structure of the graph based on the semantic metadata, wherein the graph-structure comprises a block identifier, a node for each of the phrases and associated edge with the semantic metadata; and generating the coherent representation for the block based on the graph-structure. The proposed graph-structure enables the co-occurring log messages in the blocks to be represented and stored hierarchically. This further enables ease in querying the database of with the coherent representations. Additionally, the hierarchical structure enables an expert to view and analyze small blocks (e.g. starting and stopping a specific service in an automation) embedded in larger blocks (e.g. update procedure of a specific software with several restart sequences for the automation device).

The coherent representation of the annotated blocks enables comparison with the template representation. Accordingly, the method includes enabling detection of at least one event in the block based on a comparison the coherent representation with template representations of predefined events associated with the industrial plant. As used herein "at least one event" may include a high critical event, a medium or low critical event or even a non-event. The non-event relates to a situation where the coherent representation is associated with normal operating conditions of the industrial plant. Further, the method may include predicting an event priority of the detected event based on priority associated with a comparable template representation of the template representations. The comparison is effective in view of the graph structure of the coherent representation and the template representations. Further, the semantic metadata is used to shortlist the comparable template representation.

In an embodiment, the annotation and the semantic metadata is learnt by a graph convolutional neural network that uses existing graph-based template representation that were labeled by domain experts as training examples. The graph-based structure are represented in the coherent representation that is composed of both of the structure of the sequence graph and the log entry contents. Further, an inference model may be used to predict the criticality for the coherent representation. The method may include determining the comparable template representation from the template representations based on semantic matching between the sematic metadata in the block with sematic metadata associated with the template representations. Here, the semantic labeling especially helps with cases of sequence graphs that closely match semantically, but have different words representing the same overall event.

In an embodiment, the template representation may relate to anomalous conditions that require to be detected. The comparison of the coherent representation with the template representation enables identification of anomalous conditions in the industrial plant. The method may include detecting an anomalous log message in the log files of the industrial plant based at least on associated semantic metadata; and predicting an industrial event and associated event priority based on a template representation of an anomalous block. The present invention advantageously uses existing knowledge of the industrial events and anomalous blocks to detect the anomalous log messages in new log entries. In case the anomalous log message is annotated with "inspection action" semantic metadata, the method may include inspecting the anomalous log message when the associated semantic metadata is the inspection action, wherein the inspection is performed at least partially through manual validation by an expert associated with the industrial plant. Accordingly, the present invention advantageously balances the need for an expert input and the use of the digital twin.

The present invention advantageously uses a combination of techniques to analyses log files for effective detection of anomalous log messages and industrial events in the industrial plant. In an embodiment, the usage of graph convolutional neural networks for log entry classification and sub-graph creation to represent sequence patterns of log messages and to store additional semantic information enables generation of semantically interpretable representations of log entries. Further, the graph structure is equipped to scale the analysis to different log file types. Furthermore, usage of knowledge graph analyses technologies (e.g. link prediction, graph similarity) to create criticality label of the blocks to predict event priorities.

The foregoing has outlined rather broadly the technical features of the present disclosure so that those skilled in the art may better understand the detailed description that follows. Additional features and advantages of the disclosure will be described hereinafter that form the subject of the claims. Those skilled in the art will appreciate that they may readily use the conception and the specific embodiments disclosed as a basis for modifying or designing other structures for carrying out the same purposes of the present disclosure. Those skilled in the art will also realize that such equivalent constructions do not depart from the scope of the disclosure in its broadest form.

Below, the invention is described using the embodiments illustrated in the figures.
- FIG 1: illustrates a method of analyzing one or more log files of an industrial plant, according to an embodiment of the present invention;
- FIG 2: illustrates a method determining blocks in log entries of the log files;
- FIG 3: illustrates application of the method in Fig 2 to log messages from an industrial plant;
- FIG 4: illustrates a method of analyzing co-occurring log messages in a block, according to an embodiment of the present invention;
- FIG 5: illustrates a Graphical User Interface (GUI) for analyzing log messages, according to an embodiment of the present invention;
- FIG 6: illustrates the GUI for enabling analysis of cooccurring log messages in a block, according to an embodiment of the present invention; and
- FIG 7: illustrates a device and computing platform for analyzing one or more log files of an industrial plant, according to an embodiment of the present invention.

Hereinafter, embodiments for carrying out the present invention are described in detail. The various embodiments are described with reference to the drawings, wherein like reference numerals are used to refer to like elements throughout. In the following description, for purpose of explanation, numerous specific details are set forth in order to provide a thorough understanding of one or more embodiments. It may be evident that such embodiments may be practiced without these specific details.

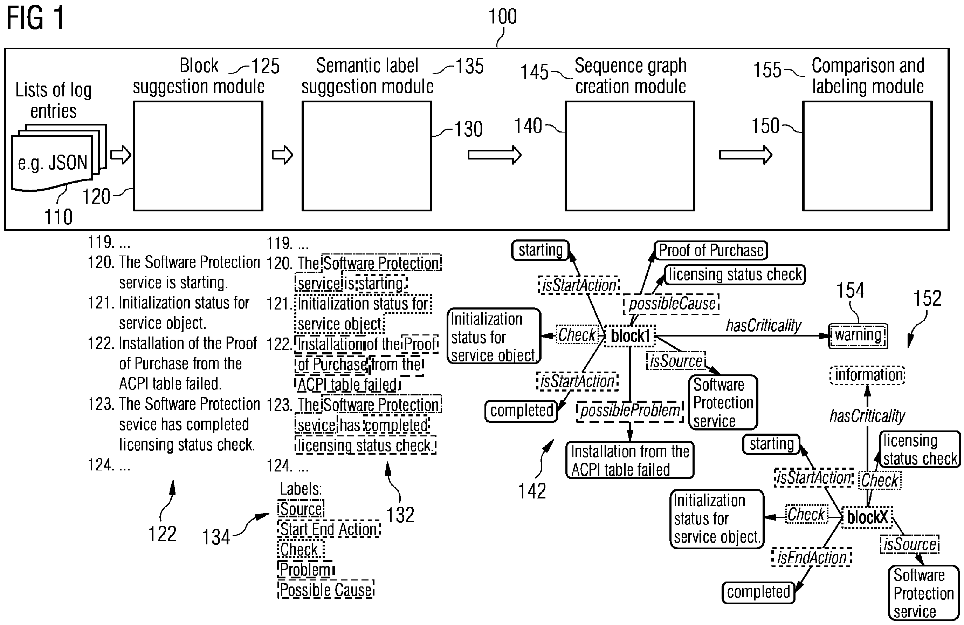

FIG 1 illustrates a method 100 of analyzing one or more log files of an industrial plant, according to an embodiment of the present invention. The steps of the method 100 are performed by executing modules 125-155 stored as computer programmable instructions on a computing device/computing platform.

At step 110, the log files are received. In an example, the log files are received in JavaScript Object Notation (JSON) format. In another example, at step 110 the log files are received in different formats and converted into a common structured representation, such as tabular format.

The following steps illustrate the steps of the method 100 when the modules 125-155 are executed.

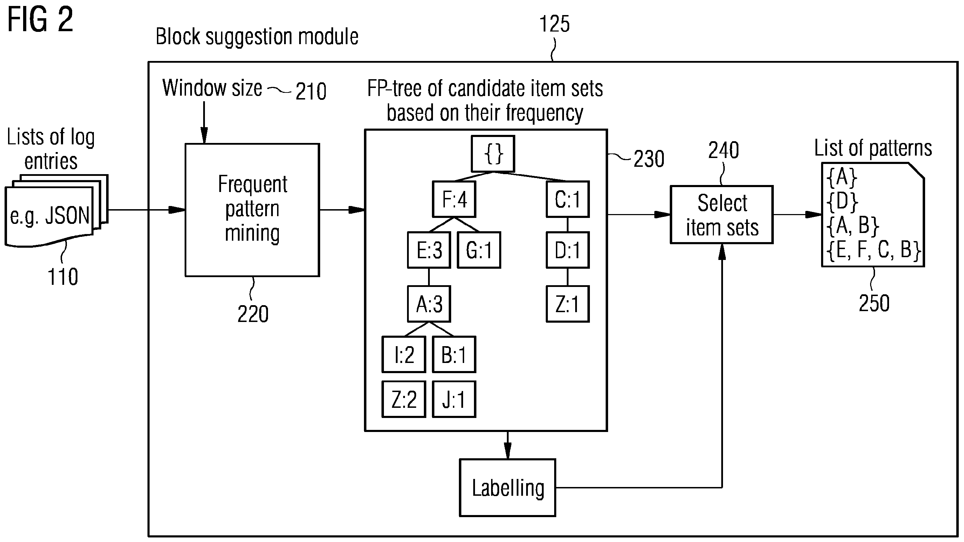

At step 120, a block suggestion module 125 determines one or more blocks (such as block 122) in log entries of the log files. The log entries comprise one or more log messages, and the block 122 represents co-occurring log messages (i.e. lines 120-123 of the block 122). In an embodiment, the block suggestion module 125 determines the blocks using a Frequency Pattern Tree (FPT). The method of determining the blocks is described in detail in Fig 2.

At step 130, a semantic label suggestion module 135 is annotates the co-occurring log messages of the block 122 using semantic metadata 134. The semantic metadata 134 act like labels that define one or more message types for the co-occurring log messages. The semantic metadata 134 includes the following labels a start action, an end action, a source, an anomaly, a cause and an inspect action. Each of the labels can be indicated visually using color coded scheme to ease visual analysis of the log entries. The annotated block 132 indicates hatched line schemes to illustrate the different semantic metadata 134.

A basic list of the semantic metadata 134 defined for log message analysis in industrial log files is used when a custom semantic metadata is not generated. For example, Source is annotated to indicate a device, application, threat, path, file. Start or end action is annotated when the words "is starting," "has started", "initiated", "completed", "finished" and "shut down" is illustrated. Check/Inspection action is annotated when terms like "Initialization status", "licensing status check", "is being held in use", "contains the new values" are detected. Problem and possible Cause is annotated when "failed", "is missing", "deleted", "error", "unexpected failure", "set computer in FAULT", "is not reachable" is detected in the log messages.

At step 130, the semantic label suggestion module 135 automatically assigns semantic metadata 134 to text passages belonging to the block 122. The semantic metadata 134 serve as additional contextual information for the interpretation of the co-occurring log messages belonging to the block 122. In order to automatically label the block 122 (and other blocks) a machine learning model is trained to identify the semantic metadata 134 relevant to the industrial plant. Accordingly, step 130 may further include training a machine learning model to determine the semantic metadata 134 relevant to the industrial plant.

In an embodiment, the domain knowledge is extracted from either an ontology of the industrial plant or based on input from experts. For example, the domain knowledge is collected from experts by providing a specially developed user interface that receives input on training examples. In the first phase of the training the expert may highlight words or word groups and assign them a label from a list of predefined semantic metadata. A custom list of predefined semantic metadata is created for each industry/industrial application. This can be done with the help of domain expertise, based on a frequency-based data analysis, or standards/vocabularies already available in the application domain.

In another embodiment, the semantic metadata 134 is annotated on the block 122 by extracting "chunks", phrases that have a distinct meaning, from unstructured text in the co-occurring log messages. At step 130 a part of speech (POS) tagging on the block 122 is performed and the chunks are computed. Further, at step 130 semantic labeling task is formulated as a multi-class classification problem on the basis of a phrase/chunk. The classification is performed by the trained machine learning model.

At step 140, a sequence graph creation module 145 generates a coherent representation 142 for the block 122 by representing the co-occurring log messages in a graph based on the semantic metadata 134. The graph creation module 145 creates the coherent representation 142 for each block of the log entries. The structure of the coherent representation is given by the semantic metadata assigned in step 130.

To construct the coherent representation for the block 122, the following sub-steps may be performed at step 140. A unique identifier is generated and all phrases/chunks that do not have a semantic label assigned to them get discarded. Further, for every phrase (p) with a semantic metadata(s) a node with name (p) is created with an edge with name (s) as indicated in the coherent representation 142. With the coherent representation 142 unstructured information in the block 122 is in a structured way, not restricting the analysis to a predefined data model. Further, the graph-based representation is easily scalable if new types of log entries appear or if a more complex log file needs to be modeled.

At step 150, a comparison and labeling module 155 enables detection at least one event in the block based on a comparison the coherent representation with template representations of predefined events associated with the industrial plant. In an embodiment, the comparison and labeling module 155 is an inference module configured to determine a comparable template representation 152 from the template representations based on semantic matching between the sematic metadata 134 in the block 122 with sematic metadata associated with the template representations and predict the criticality 154 of the event in the block 122. Further, at step 150 an event priority of the detected event is predicted based on priority associated with the comparable template representation 152.

FIG 2 illustrates a method determining blocks in log entries 110 of the log files from the industrial plant. At step 110 of Fig 1, the log entries are received by the block suggestion module 125 to determine blocks in the log entries to enable analysis of the log messages in the log entries. The block suggestion module 125 is configured to perform the steps disclosed hereinafter.

At step 210, a predetermined temporal size of a sliding window is received. In an embodiment, the predetermined temporal size may be determined at step 210. The determination of the temporal size of the sliding window is based on a sampling rate input by a domain expert associated with the industrial plant. For example, the temporal size 20 with overlap 5 is used to sample the log entries. Further, at step 210 batches are created from the log entries using a sliding window.

At step 220, frequency pattern analysis/mining is performed on the batches to identify a plurality of co-occurring log messages in the log entries. Accordingly, at step 220 unique log messages in the batches are identified and associated message-frequency is determined. The message-frequency is the number of times each unique log message has been identified.

At step 230, a frequency pattern tree is generated based on the message-frequency. In an embodiment, the frequency pattern tree is generated by ranking the unique log messages based on descending order of the message-frequency. Further, the frequency pattern tree includes a path and/or one or more new branches. The path includes the unique log messages with common prefix and wherein the new branches include unique log messages with no common prefix. As shown in Fig 2, there are two branches "F" and "c". An example path will be messages "FEA" which has message-frequency of 3. Another example is "CDZ" with message-frequency of 1.

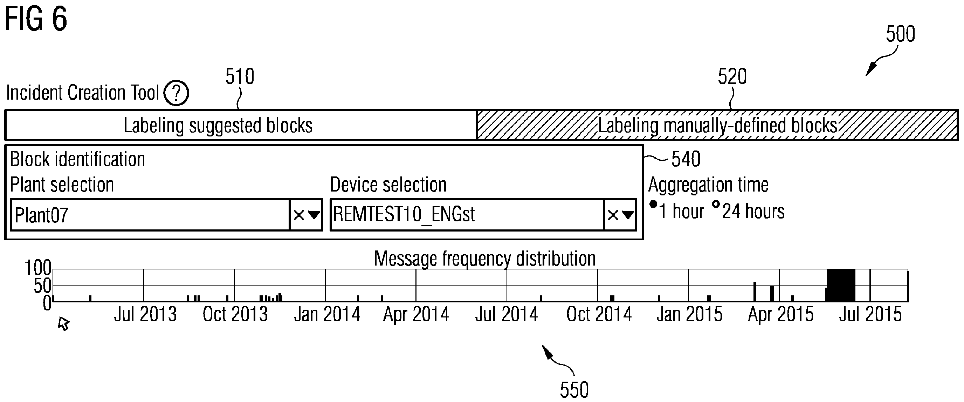

In an embodiment, after constructing the frequency pattern tree, the patterns (such as FEA, CDZ) identified are presented to a domain expert for labelling which patterns are significant/meaningful and which ones are insignificant. In an embodiment, a specially developed user interface as shown in Figure 6 enables an expert to view examples of the identified patterns. In other words, the expert gets a block of messages that correspond to one of the identified patterns with the option to accept or reject the block. The patterns are presented to the domain expert from the largest to smallest (from the root of the FP-tree downward). If a pattern gets accepted, its sub-patterns have the same frequency, they get discarded. This way, the expert only has to label a subset of all candidate patterns.

The expert involvement at this stage is optional. At step 240, all identified patterns could be considered significant or a custom frequency threshold could be applied to consider patterns significant that have a higher frequency than the frequency threshold. At step 250 the patterns which satisfy the frequency threshold or which are labeled by the expert are extracted from the frequency pattern tree and stored as significant patterns.

As used herein "patterns" have the same meaning of blocks according to the present invention. The term pattern is used with reference to the frequency pattern tree. This is to enable a person skilled in the art to draw understanding of how the blocks are determined using the frequency pattern tree.

In operation the method disclosed in Fig 2 is applied to log files from an industrial plant. The log messages include event identifiers and event frequency.

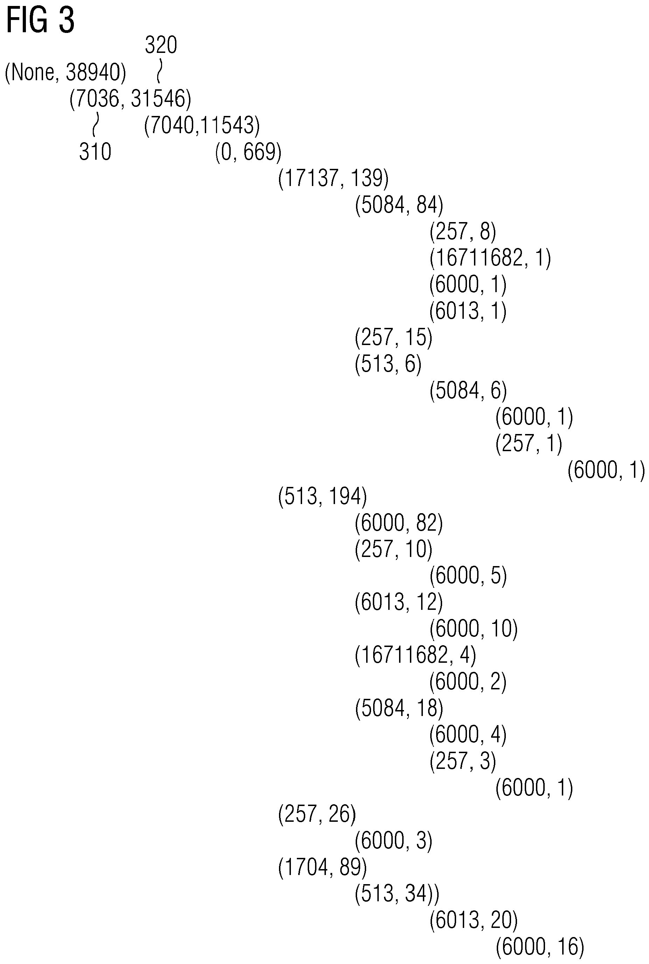

FIG 3 illustrates application of the method in Fig 2 to log messages from the industrial plant. The block suggestion module 125 is configured to output a combination of the event identifier 310 and the event frequency 320. Accordingly, an analysis of both more frequent and less frequent blocks can be performed to determine the significant blocks. The determination of the significant blocks enables generation of template representations which further enable detection of events in a newly identified block.

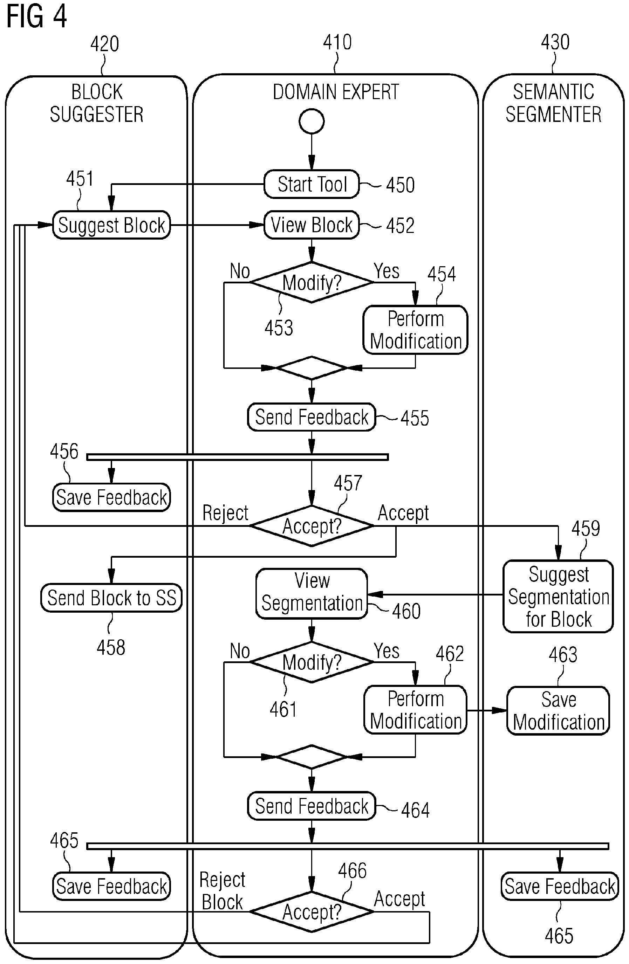

In an embodiment, after constructing the frequency pattern tree, the blocks are presented to a domain expert for labelling which blocks are valid segments of co-occurring log messages, which blocks are significant/meaningful and which ones are insignificant. FIG 4 illustrates a method of analyzing co-occurring log messages in a block, according to an embodiment of the present invention.

As shown in Fig 4, three entities 410, 420 and 430 may be involved in the determination of blocks in the log entries. A domain expert 410 interacts with a block suggestion module 420 and a semantic segment module 430. A person skilled in the art will appreciate that the entities 410, 420 and 430 can be implemented purely as computer programable instructions with the digital twin of the industrial plant serving as a domain expert. In the present example, the inputs of the domain expert is received manually.

At step 450 a Graphical User Interface (GUI) for analyzing log messages is launched on a computing device used accessed by the domain expert 410. The launch of the GUI triggers the block suggestion module 420. At step 451, the block suggestion module 420 suggests one or more blocks, with co-occurring messages, to the domain expert 410. At step 452, the domain expert views the block/blocks and checks whether to modify at step 453. If modification is required, the block(s) are modified at step 454. The feedback regarding the modification is sent to the block suggestion module 455. At step 456, the feedback is saved or learnt by the block suggestion module 420. At step 457, the block(s) is accepted and sent to the semantic segment module 430 or rejected and sent to the block suggestion module 420 at steps 458 and 457, respectively. The feedback including the acceptance or rejection of the blocks are used to confirm the modification or request a new block suggestion. By confirming and saving the feedback, block (s) having with the same frequency get automatically accepted if no modification is required. Or get modified automatically based on the modifications performed at step 454. Accordingly, the domain expert 410 only has to label a subset of all the blocks generated.

At step 460, the domain expert 410 views a semantic segmentation suggested at step 459 by the semantic segment module 430. The semantic segmentation refers to annotation of the block(s) based on the semantic metadata. At step 461, the domain expert 410 determines whether the annotation is to be modified, if yes the annotation is modified at step 462. The modification is saved at step 463. Further, feedback regarding the modified semantic segmentation is sent to the block suggestion module 420 and the semantic segment module 430 at step 465. Through the feedback the block suggestion module 420 and the semantic segment module 430 are trained based on the modification of the semantic segmentation performed by the domain expert 410. Further, at step 466 the modified annotation is accepted and a new block may be suggested by the block suggestion module 420.

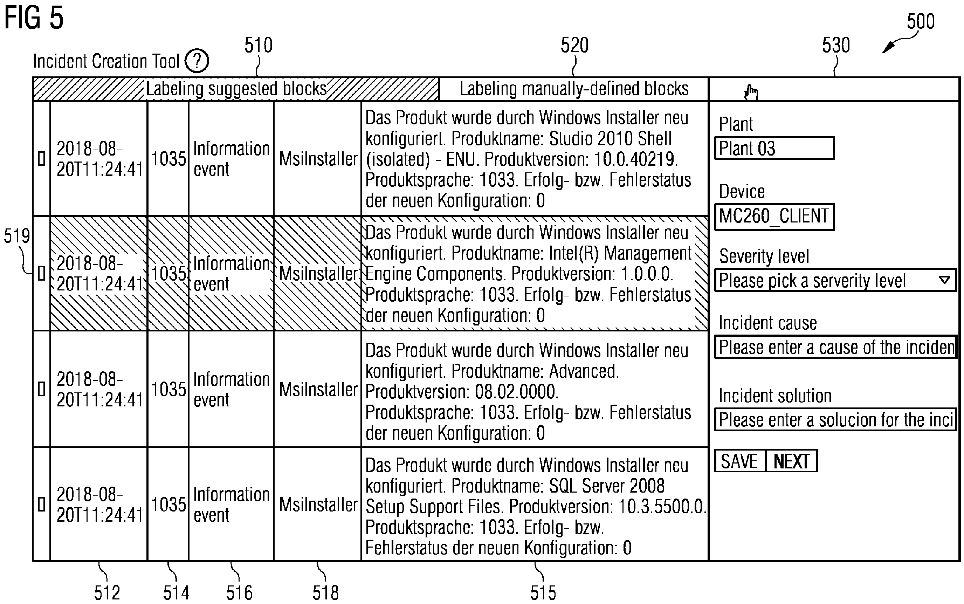

FIG 5 illustrates a Graphical User Interface (GUI) 500 for analyzing log messages, according to an embodiment of the present invention. The GUI 500 may be used to receive input from the domain expert 419.

The GUI 500 includes two main sections 510 and 520 i.e. a suggested block section 510 and manual block section 520. As shown in Fig 5, the suggested block section 510 has been selected. The suggested block section 510 illustrates the log messages received with timestamp 512, event identifier 514, event name 516, source 518 and message content 515. In an embodiment, the log message 519 may be annotated as inspection action. Accordingly, the domain expert 410 can select the log message 519 if the log message 519 is considered not to below with the displayed block. Further, block identification field 530 is used to give the block a label, according to the level of severity: green, yellow and red. Further, possible cause and possible solution may be input by the domain expert 410. After that you can get a new suggestion for a block may be requested by clicking "next block" in the field 530.

FIG 6 illustrates the GUI 500 for analyzing log messages, according to an embodiment of the present invention. The manual block section 520 may be selected by the domain expert 410 to label manually defined blocks. The domain expert 410 inputs the industrial plant and device details in the field 540. The GUI 500 is configured to illustrate the frequency distribution of the log messages in the field 550 to enable the domain expert to define and label the blocks. Using the manual block section 520, the domain expert 410 is provided a tool to allow exploration of the log messages by selecting time period in field 550. In addition, a list of log messages may be displayed similar to the view in Fig 5. The log messages can be filtered based on event identifier or name of the event.

A person skilled in the art will appreciate that the GUI 500 is merely an example GUI to enable a domain expert/an operator/a user to view how the blocks are determined and annotated. Accordingly, the present invention advantageously enables analysis of the steps performed by the different software modules and thereby avoiding black-box effect.

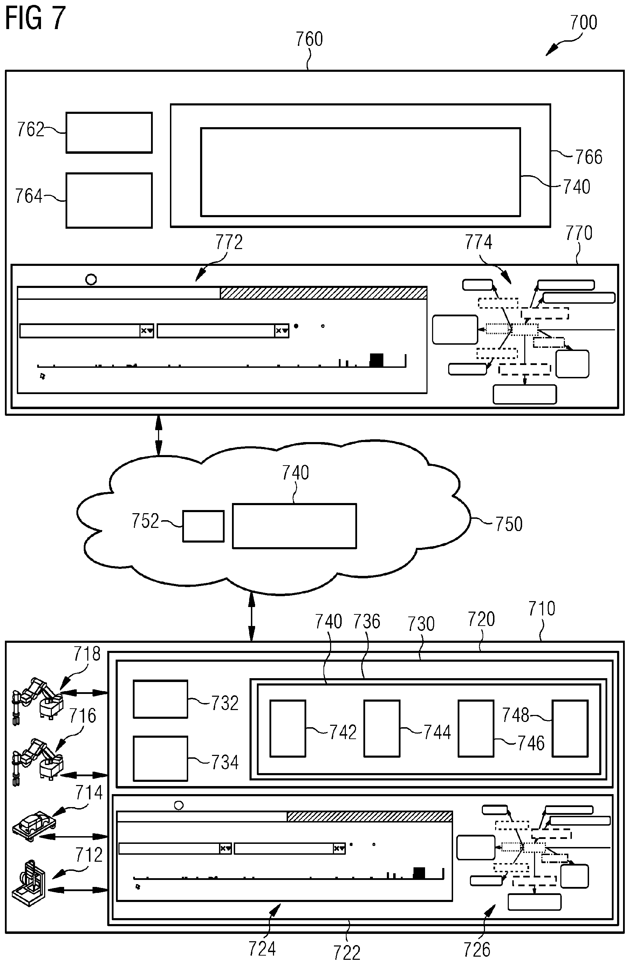

FIG 7 illustrates a apparatus 720, 760 and computing platform 750 for analyzing one or more log files of an industrial plant 710, according to an embodiment of the present invention. The industrial plant 710 includes a plurality of industrial assets (such as automation devices and systems) 712-718.

The industrial plant 710 may further include the apparatus 720 to analyze log files generated from the operation of the industrial plant 710. The apparatus 720 include an edge computing device 730 or a SCADA system used to monitor operation of the industrial plant 710, or a part of the industrial plant 710. The apparatus 720 may also include a Human Machine Interface (HMI) used to enable interaction with an operator of the industrial plant 710. The device to analyze log files may also be a device 760 outside the network of the industrial plant 710 communicatively coupled to the industrial plant 710 the cloud computing platform 750. In an embodiment, the cloud computing platform 750 hosts a log analyzer module 740 that analyzes the log files when executed.

The apparatus 720 includes the edge computing device 730 and the HMI panel 722. The edge computing device 730 includes a processor 732, a communication interface 734 and a firmware module 736. The firmware module 736 is a dedicated computing unit with a dedicated memory used to perform the steps of the present invention. The processor 732 and the communication interface 734 are used to enable the edge computing device 730 to perform other functions in the industrial plant 710, such as gateway operations of connecting the industrial plant 710 to the cloud computing platform 750.

The firmware module 736 includes the log analyzer module 740. The log analyzer module 740 further includes a block suggestion module 742, a semantic label suggestion module 744, a graph creation module 746 and a comparison and labeling module 748. The operation of the modules 742, 744, 746 and 748 are comparable to the modules 125, 135, 145 and 155, respectively.

The HMI 722 is configured to display the GUI 724 and a coherent representation 726 of blocks determined during the operation of the present invention. The operation of the GUI 724 is comparable to the GUI 500 in Figs 5 and 6. The coherent representation 726 may be displayed interactively to enable input from an operator or domain expert using the HMI 722.

In another embodiment, the device 760 includes a processing unit 762, a communication interface 764, a memory 766 and a display unit 770. The device 760 is communicatively coupled to the industrial plant 710 via the cloud computing platform 750. The device 760 may be a hand-held computing device or an AR/VR device that is capable of communicating with the cloud computing platform 750. The memory 766 includes the log analyzer module 740 and is executed by the processor 762 to perform the steps of the present invention.

In yet another embodiment, the log analyzer module 740 on the device 760 acts as a client application of a server application 740 hosted and executed on the cloud computing platform 750. In addition, the cloud computing platform 750 may include a template database 752 with template representations of events that could occur in the industrial plant 710. The template database 752 may be generated based on historical log files or based on operation of a comparable industrial plant.

The template representation may relate to anomalous conditions that require to be detected in the industrial plant 710. The comparison of the coherent representation 726, 774 with the template representation in the template database 752 enables identification of anomalous conditions in the industrial plant 710. In an embodiment, the template database 752 includes a mapping of the anomalous conditions, priority/criticality and the template representation. Accordingly, by comparing the coherent representation 726, 774 a priority/criticality for the coherent representation 726, 774 can be determined.

The present invention can take a form of a computer program product comprising program modules accessible from computer-usable or computer-program product/computer-readable medium storing program code for use by or in connection with one or more computers, processors, or instruction execution system. For the purpose of this description, a computer-usable or computer-readable medium can be any apparatus that can contain, store, communicate, propagate, or transport the program for use by or in connection with the instruction execution system, apparatus, or device. The medium can be electronic, magnetic, optical, electromagnetic, infrared, or semiconductor system (or apparatus or de-vice) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and DVD. Both processors and program code for implementing each aspect of the technology can be centralized or distributed (or a combination thereof) as known to those skilled in the art.

While the present invention has been described in detail with reference to certain embodiments, it should be appreciated that the present invention is not limited to those embodiments. In view of the present disclosure, many modifications and variations would be present themselves, to those skilled in the art without departing from the scope of the various embodiments of the present invention, as described herein. The scope of the present invention is, therefore, indicated by the following claims rather than by the foregoing description. All changes, modifications, and variations coming within the meaning and range of equivalency of the claims are to be considered within their scope. All advantageous embodiments claimed in method claims may also be apply to system/apparatus/device claims.

## Claims

1. A method of analyzing one or more log files of an industrial plant (710), the method comprising:
determining at least one block (122) in log entries of the log files, wherein the log entries comprises one or more log messages and wherein the block (122) represents co-occurring log messages;
annotating the co-occurring log messages of the block (122) using semantic metadata (134), wherein the semantic metadata (134) defines one or more message types for the co-occurring log messages, wherein the semantic metadata (134) is indicative of at least one of a start action, an end action, a source, an anomaly, a cause and an inspect action;
generating a coherent representation (142, 726, 774) for the block (122) by representing the co-occurring log messages in a graph based on the semantic metadata (134); and
enabling detection of at least one event in the block (122) based on a comparison the coherent representation (142, 726, 774) with template representations of predefined events associated with the industrial plant (710).

2. The method according to claim 1, further comprises:
predicting an event priority (154) of the detected event based on priority associated with a comparable template representation (152) of the template representations.

3. The method according to one of the preceding claims, further comprising:
inspecting at least one of the co-occurring log messages when the annotated semantic metadata (134) is the inspection action, wherein the inspection is performed using a digital twin of the industrial plant (710), wherein the digital twin is a digital representation of the industrial plant (710) in real-time.

4. The method according to one of the preceding claims, further comprises:
detecting an anomalous log message in the log files of the industrial plant (710) based at least on associated semantic metadata (134); and
predicting an industrial event and associated event priority based on a template representation of an anomalous block.

5. The method according to claim 4, further comprises:
inspecting the anomalous log message when the associated semantic metadata (134) is the inspection action, wherein the inspection is performed at least partially through manual validation by an expert associated with the industrial plant (710) .

6. The method according to one of the preceding claims, further comprising:
receiving the log entries of the log files based on a common structured representation, wherein the common structured representation of the log entries comprises at least of timestamps and the log messages, and a source identifier;
creating one or more batches of the log entries using a sliding window of a predetermined temporal size;
identifying a plurality of co-occurring log messages based on pattern frequency analysis of the batches, wherein the plurality of co-occurring log messages comprises the co-occurring log messages of the at least one block (122); and
determining one or more blocks in the log entries by identifying separable co-occurring log messages in the plurality of co-occurring messages, wherein the separable co-occurring log messages are determined as separate blocks and wherein the one or more blocks comprises the at least one block (122).

7. The method according to claim 6, wherein identifying a plurality of co-occurring log messages based on pattern frequency analysis of the batches comprises:
identifying unique log messages in the batches and associated message-frequency, wherein message-frequency is the number of times each unique log message has been identified;
ranking the unique log messages based on descending order of the message-frequency;
generating a frequency pattern tree (230) for the unique log messages, wherein the frequency pattern tree includes at least one of a path and one or more new branches, wherein the path includes the unique log messages with common prefix and wherein the new branches include unique log messages with no common prefix; and
determining the plurality of co-occurring log messages based on the path and the new branches in the frequency pattern tree.

8. The method according to one of claim 1 and claim 7, further comprising generating the template representations for the predefined events in the industrial plant (710), wherein generating the template representations comprises:
identifying at least one co-occurring log messages as a significant block when frequency of the path in the frequency pattern tree is below a frequency threshold;
mapping at least one predefined event to the significant block; and
generating the template representations for the significant block as a knowledge graph.

9. The method according to one of the preceding claims, further comprising:
generating the semantic metadata (134) based on at least one of an input from the expert, a frequency based data analysis performed on the log files and an ontology associated with the industrial plant (710).

10. The method according to one of claim 1 and claim 9, wherein annotating the co-occurring log messages of the block (122) using semantic metadata (134) comprises:
extracting chunks from the co-occurring log messages in the blocks, wherein the chunks include one or more phrases with a distinct meaning; and
annotating the phrases by classifying each phrase according to the semantic metadata (134) using a classification model.

11. The method according to one of the preceding claims and particularly claim 1, wherein generating a coherent representation (142, 726, 774) for the block (122) by representing the co-occurring log messages in a graph based on the semantic metadata (134) comprises:
defining a graph-structure of the graph based on the semantic metadata (134), wherein the graph-structure comprises a block identifier, a node for each of the phrases and associated edge with the semantic metadata (134); and
generating the coherent representation (142, 726, 774) for the block (122) based on the graph-structure.

12. The method according to one of the preceding claims and particularly claim 2, wherein predicting an event priority of the detected event based on priority associated with a comparable template representation of the template representations comprises:
determining the comparable template representation from the template representations based on semantic matching between the sematic metadata in the block (122) with sematic metadata associated with the template representations.

13. A device for analyzing one or more log files of an industrial plant (710), the device comprising:
a firmware module comprising a log analyzer module (740) configured to perform at least one or more method steps according to claims 1-12.

14. A computing platform for analyzing one or more log files generated during operation of an industrial plant (710), the platform comprising:
at least one device communicatively coupled to the industrial plant (710) via the computing platform, the at least one device comprising a processor and a memory unit, wherein the memory unit comprising a log analyzer module configured to perform at least one or more method steps according to claims 1-12 and wherein the computing platform configured as at least one of an edge computing platform and a cloud computing platform (750).

15. A computer-readable medium, having machine-readable instructions stored therein, that when executed by a processor (762) cause the processor to perform method steps according to any of the claims 1-12.
